# FASCICULE DE BREVET EUROPEEN

(11) **EP 0 282 383 B1**
(45) Date de publication et mention de la délivrance du brevet: **28.04.1993**
(21) Numéro de dépôt: 88400387.2
(22) Date de dépôt: 19.02.1988
(51) Int. Cl.: G02B 6/44

(54) **Dispositif d'introduction de fibres optiques dans des rainures hélicoidales d'un jonc pour ligne de câblage**
Einführungsvorrichtung für die Einfädelung von optischen Fasern in die spiralförmigen Nuten eines Trägerkörpers
Device to introduce optical fibres into the helical grooves of a cable support member

(30) Priorité: 02.03.1987 FR 8702798
(43) Date de publication de la demande: 14.09.1988
(73) Titulaire: SAT Société Anonyme de Télécommunications, 75116 Paris (FR); SOCIETE INDUSTRIELLE DE LIAISONS ELECTRIQUES (SILEC), F-75008 Paris (FR)
(72) Inventeur: Missout, Bernard Michel, F-75631 Paris Cédex 13 (FR); Michaux, Jean-Pierre, F-75631 Paris Cédex 13 (FR)
(74) Mandataire: Cabinet Martinet & Lapoux

(56) Documents cités:
- EP-A- 0 108 850
- FR-A- 2 388 931
- FR-A- 2 577 051
- GB-A- 2 168 730
- US-A- 4 205 899

## Description

La présente invention concerne un dispositif d'introduction de fibres optiques dans des rainures hélicoïdales d'un jonc défilant axialement dans une ligne de câblage, en vue de fabriquer un câble optique.

En amont du dispositif d'introduction, les fibres sont tirées à partir de bobines débitrices montées à rotation folle ou freinée sur un plateau-support tournant autour du jonc et convergent coniquement vers le dispositif. La vitesse de rotation du plateau-support est asservie à la vitesse de rotation apparente des rainures du jonc défilant afin que les fibres soient introduites convenablement dans les rainures quelle que soit la variation du pas des rainures due à la fabrication par extrusion du jonc. En aval du dispositif, le jonc translaté pénètre dans au moins une rubaneuse pour fermer les rainures contenant les fibres optiques en appliquant une gaine de protection autour du jonc.

Selon la technique antérieure, telle que décrite dans les documents de brevet FR-B-2 388 931, FR-B-2 418 940, FR-B-2 500 174, GB-A-2 022 644, GB-A-2 121 209, et FR-B-2 565 361, un dispositif d'introduction de fibres optiques comprend un support de guide-fibre tournant coaxialement au jonc et offrant ou des conduits, ou des rainures, ou des tubes capillaires ou des guide-fibres métalliques logés dans des conduits ou rainures du support qui convergent le long de génératrices d'un cône coaxial avec le jonc et jouent le rôle de guide-fibre pour respectivement guider les fibres tirées coniquement des bobines sur le plateau-support vers les rainures du jonc.

Comme le plateau-support, la rotation du support de guide-fibre dépend des variations du pas des rainures du jonc. Le couplage en rotation entre le jonc et le support de guide-fibre est obtenu généralement soit par des extrémités aval effilées ou biseautées des guide-fibre, encastrées respectivement dans les rainures du jonc, soit par au moins un doigt de positionnement et d'entraînement saillant à l'intérieur d'un alésage du support de guide-fibre et coopérant avec une rainure hélicoïdale spécifique pratiquée dans le jonc, ou une rainure propre à recevoir une fibre optique.

L'utilisation d'un tel support de guide-fibre comme décrite dans le FR-B-2 565 361, nécessite, en pratique, des moyens pour rabattre les fibres optiques dans les rainures, puisque vues en section transversale au jonc, les extrémités aval des guide-fibre emplissent les rainures du jonc et les guide-fibre introduisent les fibres juste à la périphérie du jonc, à distance relativement élevée du fond des rainures. Les moyens pour rabattre sont constitués par une filière fixe en rotation, disposée en aval du support de guide-fibre, devant les extrémités aval des guide-fibre dans les rainures du jonc, et traversée coaxialement et librement par le jonc.

Les dispositifs d'introduction connus offrent plusieurs inconvénients :
- le support de guide-fibre, et plus particulièrement, les guide-fibre sont des pièces complexes, exigeant une fabrication soigneuse avec une précision élevée, et par suite sont onéreux ;
- les guide-fibre sont minces et longilignes, eu égard au diamètre très faible des fibres optiques qu'ils guident, sont sujets d'une part à des obstructions par des saletés et poussières, d'autre part à des flexions excessives, voire fêlures ou cassures, dommageables notamment lors de la mise en fonctionnement de la ligne de câblage et du tirage manuel initial du jonc, ou lors de variations du pas des rainures et également de la section des rainures en cours de fonctionnement de la ligne en raison du couplage entre le jonc et le support de guide-fibre par les extrémités aval des guide-fibre ;
- bien que parfois soit prévue une filière fixe pour rabattre les fibres introduites dans les rainures, les fibres "flottent" dans les rainures du jonc en sortie du dispositif d'introduction si bien que certaines fibres peuvent demeurer en périphérie externe du jonc et être coincées ou fracturées lors d'opérations ultérieures de rubanage, de tirage et de torsion du jonc.

Selon une variante de la FR-A-2 388931, le support du guide-fibre tournant axialement avec les rainures du jonc grâce à un doigt engagé avec une rainure particulière du jonc comporte à une extrémité aval, une série de conduits radiaux de jet d'air. Les conduits communiquent avec les rainures du jonc afin que les jets d'air poussent les fibres rabattues préalablement par des rainures internes au support de guide-fibre. Les jets d'air nécessitent des moyens pneumatiques complexes.

La présente invention vise à pallier les inconvénients précédants, en supprimant l'emploi de guide-fibre et tout couplage direct en rotation avec le jonc dans un dispositif d'introduction de fibres optiques, et en prévoyant une poussée des fibres rabattues vers le fond des rainures.

A cette fin, un dispositif selon l'invention pour introduire des fibres optiques dans des rainures hélicoïdales d'un jonc défilant axialement est tel que défini dans la revendication 1.

Selon une caractéristique de l'invention, les moyens pour rabattre comprennent une filière fixe ayant un alésage lisse comprenant un tronçon tronconique, de préférence à génératrice convexe, contre lequel glissent les fibres convergentes sortant des moyens-supports, et un tronçon cylindrique prolongeant le tronçon tronconique suivant la direction de défilement du jonc et affleurant sensiblement la périphérie du jonc. Le tronçon tronconique rapproche progressivement les fibres vers la périphérie du jonc, et le tronçon cylindrique rabat les fibres rapprochées dans les rainures respectivement. L'alésage de la filière est lisse, et par suite, est de fabrication simple par rapport aux supports de guide-fibre selon la technique antérieure, et n'est sujet à aucune obstruction par des poussières.

Selon une autre caractéristique de l'invention, l'élément tournant a une denture hélicoïdale qui pénétre dans des rainures du jonc pour pousser les fibres rabattues vers les fonds des rainures, et les moyens pour pousser comprennent des moyens pour entraîner en rotation l'élément tournant en fonction de la vitesse de rotation apparente des rainures du jonc. L'élément tournant peut être une vis sans fin ou une roue dentée ayant un axe de rotation orthogonal ou parallèle au jonc, ou une couronne ayant un alésage avec des dents pénétrant respectivement dans les rainures du jonc.

Les moyens pour pousser permettent également à l'intérieur de la filière fixe, d'aligner les rainures du jonc, formant encoches radiales vues en section transversale, avec les génératrices du tronc de cône le long desquelles défilent et convergent les fibres optiques sortant des moyens-supports.

D'autres caractéristiques et avantages de la présente invention apparaîtront plus clairement à la lecture de la description suivante de plusieurs réalisations préférées de l'invention en référence aux dessins annexés correspondants dans lesquels :
- la Fig.1 est une vue longitudinale schématique d'une ligne de câblage de fibres optiques incluant un dispositif d'introduction selon l'invention ;
- la Fig.2 est une vue détaillée, partiellement en coupe longitudinale, du dispositif d'introduction ; et
- la Fig.3 est une vue en coupe prise le long de la ligne III-III de la Fig.2 montrant deux vis sans fin pour pousser des fibres optiques.

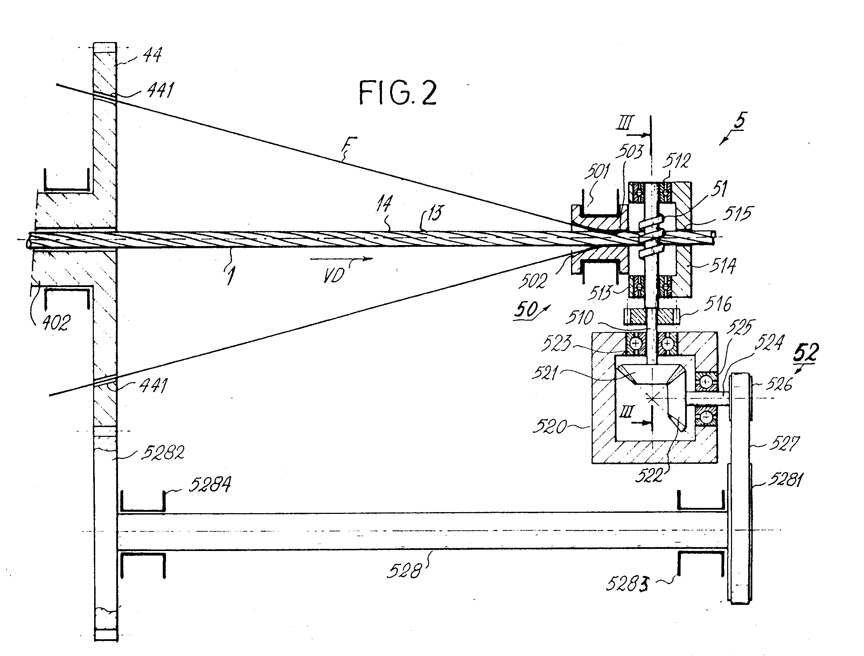

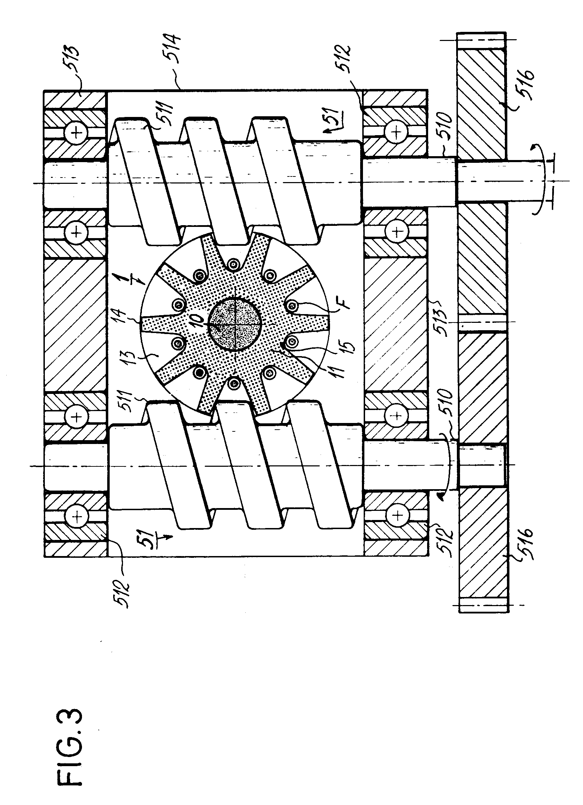

Comme montré en vue longitudinale et en coupe transversale aux Figs.2 et 3, un jonc 1 pour constituer une âme de câble optique connu, comprend, selon la réalisation illustrée, une armature résistante centrale cylindrique 10 et un profilé de forme générale cylindrique 11 obtenu par extrusion de matière plastique en continu autour de l'armature. L'armature centrale 10 est composée d'un fil d'acier ou de plusieurs fils d'acier torsadés ; selon une autre variante, le jonc ne contient pas d'armature, et/ou contient des armatures filiformes noyées dans le profilé 11. Le profilé comporte N = 10 rainures hélicoïdales parallèles 13 équiréparties à la périphérie du jonc et propres à recevoir chacune une fibre optique F selon la réalisation illustrée, ou plusieurs fibres optiques. Comme montré à la Fig.3, les rainures 13, vues en coupe transversale, sont analogues à des encoches radiales et forment entre elles des dents ou branches d'une étoile régulière qui constituent des filets trapézoïdaux 14 s'étendant parallèlement et hélicoïdalement suivant le sens longitudinal, comme montré à la Fig.2. Selon la réalisation illustrée, les rainures 13 ont une section transversale en V ayant un fond semi-circulaire 15 et un angle au sommet de l'ordre de 30° à 60°, bien que cette section puisse être semi-circulaire, trapézoïdale, rectangulaire ou carrée par exemple. Les rainures suivent des tracés hélicoïdaux qui peuvent être tantôt directs tantôt rétrogrades. Les rainures ont un pas P grand par rapport au diamètre externe du jonc, typiquement dans un rapport de l'ordre de 10 à 60.

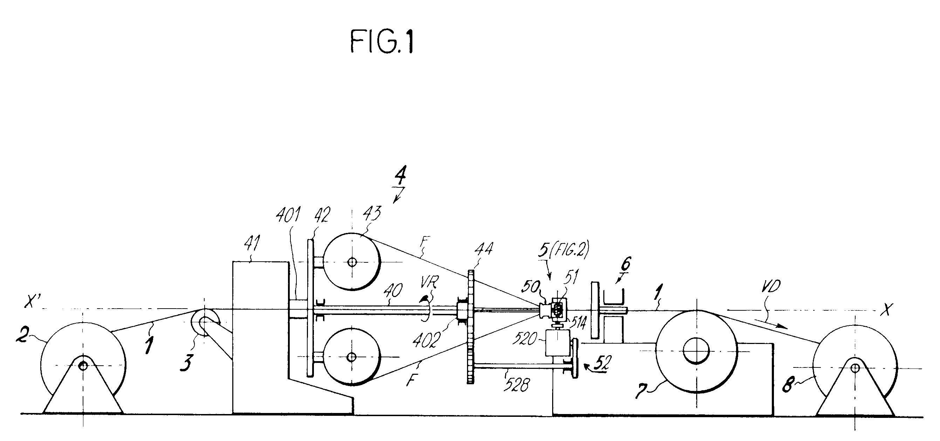

En référence à la Fig.1, on rappelle, à titre d'exemple, qu'une ligne de câblage à fibres optiques comporte principalement, d'une extrémité amont vers une extrémité aval suivant une direction de défilement X'X du jonc 1 principalement horizontale selon la réalisation illustrée :
a) un dérouleur 2 pour dérouler le jonc 1, sous la forme d'une bobine à rotation folle horizontale, selon la réalisation illustrée, ou d'un fût de stockage à axe vertical ;
b) un ensemble 3 de roues de freinage et de roues de tension, dont une seule est représentée, pour tirer linéairement le jonc et le soumettre à un effort de traction jusqu'à l'extrémité aval de la ligne de câblage ;
c) un dispositif d'alimentation de fibres optiques 4 comprenant
   c1) un tube longitudinal tournant 40 traversé coaxialement et librement par le jonc défilant 1, ayant des extrémités amont 401 et aval 402, l'extrémité amont 401 du tube étant supportée par des paliers à roulement à billes logés dans un bâti fixe de la ligne de câblage et coopérant avec un système d'asservissement électromécanique 41 à moteur correcteur pour asservir la vitesse de rotation VR du tube autour du jonc à la vitesse rectiligne de défilement VD du jonc, et plus précisément à la vitesse de rotation apparente des rainures égale au nombre VD/P de pas des rainures hélicoïdales 13 du jonc par seconde, afin de corriger des variations du pas des rainures hélicoïdales dues à la fabrication du jonc par extrusion,
   c2) un grand plateau-support vertical 42 fixé à l'extrémité amont 401 du tube et supportant N = 10 bobines 43 débitrices de fibres optiques montées à rotation folle ou freinée et horizontale, et équiréparties autour de l'axe X'X, et
   c3) un petit plateau vertical 44 fixé à l'extrémité aval 42 du tube et supporté par un palier à roulement à billes ; dans le plateau 44 étant prévus N = 10 orifices 441 (Fig.2) équirépartis circulairement à travers lesquels sont guidées et tirées à partir des bobines débitrices 43 les fibres optiques F, en permanence, suivant des génératrices d'un cône convergeant vers l'axe XʹX en aval du plateau 44 ;
d) un dispositif d'introduction 5 pour introduire les fibres F sortant du dispositif d'alimentation 4 dans les rainures 13 du jonc défilant 1 ;
e) un dispositif de guipage et/ou de rubanage 6 pour guiper et/ou enrubanner le jonc contenant les fibres optiques avec une ou plusieurs gaines de protection par exemple en terphane, le dispositif 6 étant couplé à un moteur principal pour translater le jonc à la vitesse de défilement VD, et le moteur principal étant couplé au moteur correcteur inclus dans le système d'asservissement par l'intermédiaire d'un différentiel entraînant en rotation les plateaux 42 et 44 ;
f) un dispositif de tirage 7 comprenant une roue de tirage ayant un axe horizontal transversal entraîné par le moteur principal, et autour de laquelle le jonc enrubanné est enroulé plusieurs fois, pour exercer une traction sur le jonc à partir de l'ensemble de roues 3 en amont, pendant l'introduction des fibres dans les rainures du jonc, et ainsi créer une surlongueur des fibres par rapport aux rainures lorsque le jonc enrubané en sortie de ligne revient à son état initial non tendu, prêt à être utilisé ; et
g) un dispositif d'enroulement 8 comprenant une roue de stockage ayant un axe horizontal transversal entraîné par le moteur principal, et autour de laquelle est enroulé et stocké le jonc contenant les fibres optiques et rubané, prêt à l'emploi.

Pour de plus amples informations au sujet d'une telle ligne de câblage connue, on pourra se reporter notamment au brevet FR-B-2 565 360 au nom des demanderesses.

Comme montré en détail aux Figs.2 et 3, un dispositif d'introduction 5 selon l'invention, comprend essentiellement une filière lisse fixe 50, deux vis sans fin 51, et un système de transmission mécanique 52 pour entraîner en rotation les vis sans fin 51 en synchronisme avec la rotation du plateau à orifices 44 et ainsi en fonction du pas variable P des rainures 13 du jonc 1.

La filière 50 a une forme générale cylindrique et est fixée coaxialement au jonc 1, sur une chaise 501 formant palier du bâti. A l'intérieur de la filière sont prévus, le long de l'axe XʹX, un alésage tronconique lisse 502 en amont, en vis-à-vis du plateau 44, et un alésage cylindrique lisse 503, en aval, l'alésage 503 ayant un diamètre sensiblement supérieur au diamètre externe du jonc 1 et égal au diamètre de la petite base de l'alésage tronconique 502, afin que l'alésage 503 affleure sensiblement les filets 14 du jonc. L'alésage tronconique 502 est tangent au cône déjà cité, ayant un angle au sommet de l'ordre de 30°, le long des génératrices duquel sont guidées et tirées les fibres optiques F à partir des bobines débitrices 43 et à travers les orifices 441 du plateau 44. De préférence, afin de faciliter la pénétration des fibres F dans la filière suivant des trajectoires curvilignes, sans discontinuité, le profil longitudinal de l'alésage tronconique 502 offre une surface de révolution quelque peu convexe ayant un rayon de courbure élevé. Les fibres F glissent ainsi le long de l'alésage tronconique 502 en se rapprochant progressivement de la périphérie du jonc défilant 1 et sont rabattues simultanément dans les rainures respectices 13 du jonc par l'alésage cylindrique 503 dans lequel défile librement le jonc 1. Puis les fibres F sont poussées vers le fond 15 des rainures 13 au moyen des vis sans fin 51 qui également alignent les rainures 13 du jonc, vues en section tranversale, avec les génératrices du cône des fibres convergentes, au niveau de la filière 50, et sensiblement à la jonction entre les alésages 502 et 503.

Les vis 51 ont des axes parallèles 510 disposés symétriquement et perpendiculairement par rapport à l'axe XʹX du jonc 1 sortant de l'alésage cylindrique 503 de la filière fixe 50. Chaque vis offre un filetage hélicoïdal 511 engrenant latéralement à glissement avec les filets formant dents 14 du jonc 1. Chaque vis 51 et le jonc 1 qui est analogue à une roue à denture hélicoïdale en coupe transversale, constituent ainsi un engrenage hélicoïdal à axes orthogonaux sans que, selon l'invention, la rotation apparente des rainures 13 du jonc 1 contribue à la rotation de la vis sans fin, le jonc et la vis étant complètement découplés. Les filetages hélicoïdaux des vis 51 ont le même sens que les rainures hélicoïdales 13 du jonc, qui sont tous des hélices à droite selon la réalisation illustrée. Les deux vis 51 tournent en sens contraires.

Comme montré en détail à la Fig.3, chaque vis sans fin 51 ne comporte qu'un filet hélicoïdal 511 ayant une largeur, en périphérie externe, inférieure à la largeur des rainures 13 mesurée à la périphérie du jonc 1 afin que le filet pénètre au moins jusqu'à mi-profondeur des rainures 13, et ainsi pousse les fibres optiques F vers le fond 15 des rainures, lors des translation du jonc et rotation de la vis concomitantes au moyen du système de transmission 52. Cette poussée des fibres complète le plaquage automatique des fibres au fond des rainures 13 en raison du caractère hélicoïdal de ces rainures.

Selon d'autres réalisations, chaque vis sans fin comporte plusieurs filets, par exemple au nombre de quatre.

Pour une vis sans fin avec un filet, la vitesse de rotation des vis est égale à N × (VD/P), où VD/P est la vitesse de rotation apparente des rainures du jonc. Ainsi, pour une translation d'un pas P du jonc, chacune des vis 51 pousse successivement les N = 10 fibres F vers les fonds 15 des rainures respectives 13. L'emploi d'une seule vis sans fin s'est avéré en pratique suffisant, pour la plupart des joncs rainurés ; cependant, et notamment lorsque les rainures 13 du jonc sont larges et plusieurs fibres optiques F sont à insérer dans chaque rainure 13 du jonc, l'emploi de deux vis sans fin contribue à diriger plus efficacement les fibres vers les fonds des rainures, et à aligner les rainures du jonc avec les génératrices du tronc de cône le long desquelles convergent les fibres. Selon d'autres variantes peuvent être prévues deux paires de vis sans fin, ou plus, disposées le long du jonc, en aval de la filière 51.

En référence à nouveau à la Fig.2, chacune des vis sans fin 51 est montée à rotation orthogonalement au jonc 1 et verticalement au moyen de deux roulements à billes 512 logés dans deux branches longitudinales 513 d'une console 514 ayant une section longitudinale en U. La console est fixée au bâti de la ligne de câblage. Le jonc 1 défile librement dans un alésage cylindrique 515 pratiqué dans une âme verticale de la console 514 situé à proximité des vis sans fin 51 afin de constituer une seconde filière fixe guidant le jonc 1.

Deux roues dentées 516 sont disposées sous la console 514 dans un plan horizontal et fixées aux axes 510 des vis sans fin et engrenent entre elles pour tourner les vis 51 en sens contraires. L'une des roues 516 est menée par l'autre motrice qui est elle-même entraînée en rotation par le système de transmission mécanique 52.

Le système 52 comprend dans un support 520 à section longitudinale carrée fixé au bâti, un engrenage conique et concourant ayant une roue horizontale 521 et une roue verticale 522. La roue 521 est fixée à l'extrémité inférieure de l'axe de vis sans fin 510 qui supporte la roue motrice 516 et est guidée verticalement à travers un roulement à billes 523 logé dans le support 520. La roue verticale 522 est fixée à une extrémité d'un arbre mené horizontal 524 supporté par un roulement à billes 525 logé dans le support 520. Une autre extrémité de l'arbre 524 est liée à une poulie menée 526 coopérant par l'intermédiaire d'une courroie 527 avec une poulie menante 5281 fixée à une extrémité aval d'un arbre de transmission horizontal 528. Une extrémité amont de l'arbre 528 supporte une roue dentée 5282 coopérant avec la périphérie dentée du plateau 44 formant une couronne dentée. Les extrémités aval et amont de l'arbre 528 sont supportées par des paliers adéquats 5283 et 5284 fixés au bâti de la ligne de câblage.

Sachant que le plateau 44 tourne à une vitesse de rotation asservie à la vitesse de rotation apparente des rainures 13 du jonc 1, les vis sans fin 51 tournent alors avec des vitesses de rotation variant avec les variations du pas P des rainures, par l'intermédiaire des éléments 5282, 528, 5281, 526, 522 et 521, sans que le jonc défilant 1 entraîne lui-même directement en rotation les vis sans fin 51.

Selon une autre variante, une vis sans fin 51 est remplacée par une roue dentée ou une vis sans fin ayant une denture hélicoïdale sensiblement complémentaire des rainures de jonc 13 et un axe longitudinal parallèle au jonc et tournant suivant le sens contraire de la rotation apparente des rainures de jonc.

Selon encore une autre variante, les deux vis sans fin 51 sont remplacées par une couronne dentée ayant un alésage coaxial au jonc 1 et muni d'une denture intérieure hélicoïdale sensiblement complémentaire des rainures 13 pour engrener avec les rainures 13 du jonc 1, et ayant une denture extérieure périphérique engrenant directement ou par l'intermédiaire d'une courroie crénelée avec un pignon denté fixé à l'extrémité aval de l'arbre de transmission 528, à la place de la poulie 5281 ; dans ce cas, l'alésage de la couronne dentée possède autant de dents qu'il y a de rainures de jonc 13, de sorte que chacune des dents pénètre dans une rainure respective 13 et chacune des N fibres optiques rabattues par la filière 50 est poussée en permanence par la dent respective vers le fond de la rainure de jonc correspondante. La couronne a une vitesse de rotation égale à la vitesse de rotation apparente des rainures du jonc.

## Revendications

1. Dispositif pour introduire des fibres optiques (F) dans des rainures hélicoïdales (13) d'un jonc (1) défilant axialement sans tourner au travers dudit dispositif, les fibres optiques (F) étant tirées à partir de moyens-supports (4) tournant coaxialement autour du jonc pour converger suivant des génératrices du cône vers le dispositif (5), le dispositif comprenant des moyens (50) coaxiaux au jonc pour rabattre les fibres (F) dans les rainures (13) du jonc, et des moyens (51, 52) pour pousser les fibres rabattues (F) vers les fonds (15) des rainures (13) respectivement, caractérisé en ce que les moyens pour rabattre (50) sont stationnaires en rotation, et les moyens pour pousser (51, 52) sont mécaniquement séparés et disposés à la suite des moyens pour rabattre (50) suivant la direction de défilement (VD) du jonc et comprennent au moins un élément tournant (51) engrené avec les rainures dudit jonc, la rotation dudit élément tournant étant découplée mécaniquement de la translation du jonc défilant (1).

2. Dispositif conforme à la revendication 1, caractérisé en ce que les moyens pour rabattre comprennent une filière fixe (50) ayant un alésage lisse (502,503) rabattant progressivement les fibres convergentes (F) dans les rainures (13) et traversé librement et coaxialement par le jonc (1).

3. Dispositif conforme à la revendication 2, caractérisé en ce que l'alésage de la filière (50) comprend un tronçon tronconique lisse (502), de préférence à génératrice convexe, contre lequel glissent les fibres convergentes (F), et un tronçon cylindrique lisse (503) prolongeant le tronçon tronconique suivant la direction de défilement (VD) du jonc (1) et affleurant sensiblement la périphérie (14) du jonc.

4. Dispositif conforme à l'une quelconque des revendications 1 à 3, caractérisé en ce que l'élément tournant (51) a une denture hélicoïdale (511) qui pénètre dans des rainures (13) du jonc (1) pour pousser les fibres rabattues (F) vers les fonds (15) des rainures (13), et les moyens pour pousser (51,52) comprennent en outre des moyens (52) pour entraîner en rotation l'élément tournant (51) en fonction de la vitesse de rotation apparente des rainures (13) du jonc (1).

5. Dispositif conforme à la revendication 4, caractérisé en ce que l'élément tournant est une vis sans fin (51) ou une roue dentée ayant un axe de rotation (510) orthogonal ou parallèle au jonc (1).

6. Dispositif conforme à la revendication 5, caractérisé en ce que les moyens pour pousser (51,52) comprennent deux éléments tournants (51) ayant des axes de rotation (510) disposés symétriquement par rapport au jonc (1).

7. Dispositif conforme à la revendication 4, caractérisé en ce que l'élément tournant est une couronne ayant un alésage coaxial au jonc (1) et muni de dents pénétrant respectivement dans les rainures (13) du jonc (1).

8. Dispositif conforme à l'une quelconque des revendications 4 à 7, caractérisé en ce que les moyens pour entraîner en rotation (52) sont couplés mécaniquement aux moyens-supports (4).

## Claims

1. Device for inserting optical fibers (F) into helical grooves (13) of a ring (1) travelling axially without rotating through said device, the optical fibers (F) being drawn from support means (4) rotating coaxially around the ring to converge following cone generating lines towards the device (5), the device comprising means (50) coaxial with the ring for laying the fibers (F) into the grooves (13) of the ring, and means (51,52) for thrusting the laid fibers (F) to the bottoms (15) of grooves (13) respectively, characterized in that the laying means (50) are rotationally stationary, and the thrusting means (51,52) are mechanically separed and arranged after the laying means (50) in the travel direction (VD) of the ring and comprise at least a rotating member (51) meshed with the grooves of said ring, the rotation of said rotating member being uncoupled mechanically from the translation of the travelling ring (1).

2. Device according to claim 1, characterized in that the laying means comprise a fixed quill (50) having a smooth bore (502,503) which progressively lays the converging fibers (F) into the grooves (13) and is freely and coaxially crossed by the ring (1).

3. Device according to claim 2, characterized in that the bore of the quill (50) comprises a truncated cone smooth section (502), preferably with convex generating line, against which the converging fibers (F) slide, and a smooth cylindrical section (503) extending the truncated cone section in the travel direction (VD) of the ring (1) and substantially flush with the periphery (14) of the ring.

4. Device according to any one of claims 1 to 3, characterized in that the rotating member (51) has a helical toothing (511) which penetrates into grooves (13) of the ring (1) to thrust the laid fibers (F) to the bottoms (15) of grooves (13), and the thrusting means (51,52) further comprise means (52) for rotationally driving the rotating member (51) as a function of the apparent rotational speed of the grooves (13) of ring (1).

5. Device according to claim 4, characterized in that the rotating member is a worm screw (51) or a toothed wheel having a rotating shaft (510) orthogonal or parallel to the ring (1).

6. Device according to claim 5, characterized in that the thrusting means (51,52) comprise two rotating members (51) having rotating shafts (510) symmetrically positioned with respect to the ring (1).

7. Device according to claim 4, characterized in that the rotating member is a crown having a bore coaxial with the ring (1) and fitted with teeth which penetrate the grooves (13) of the ring (1) respectively.

8. Device according to any one of claims 4 to 7, characterized in that the rotationally driving means (52) are mechanically coupled to the support means (4).

## Patentansprüche

1. Vorrichtung zum Einführen von optischen Fasern (F) in spiralförmige Nuten (13) eines stabförmigen Körpers (1), der ohne Drehung axial durch die Vorrichtung vorbei läuft, wobei die optischen Fasern (F) ausgehend von sich koaxial um den stabförmigen Körper drehenden Stiftmitteln (4) gezogen werden, um folgend Erzeugenden des Konus zur Vorrichtung (5) hin zu konvergieren, wobei die Vorrichtung zu dem stabförmigen Träger koaxiale Mittel (50) zum Umlegen der Fasern (F) in die Nuten (13) des stabförmigen Körpers und Mittel (51, 52) zum Schieben der umgelegten Fasern (F) zu den Böden (15) der Nuten (13) jeweils umfaßt, dadurch **gekennzeichnet,** daß die Mittel zum Unlegen (50) bezüglich Drehung unbeweglich sind und die Mittel zum Schieben (51, 52) mechanisch getrennt und hinter den Mitteln zum Umlegen (50) gemäß der Vorbeilaufrichtung (VD) des stabförmigen Körpers sind und wenigstens ein Drehelement (51) in Eingriff mit den Nuten des stabförmigen Körpers umfassen, wobei die Drehung des Drehelementes mechanisch von der Translationsbewegung des vorbeilaufenden stabförmigen Körpers (1) entkoppelt ist.

2. Vorrichtung nach Anspruch 1, dadurch **gekennzeichnet,** daß die Mittel zum Umlegen einen feststehenden Fadenleiter (50) umfassen, der eine glatte Bohrung (502, 503) aufweist, die die konvergierenden Fasern (F) fortschreitend in die Nuten (13) umlegt und frei und koaxial durch den stabförmigen Körper (1) durchgeführt ist.

3. Vorrichtung nach Anspruch 2, dadurch **gekennzeichnet,** daß die Bohrung des Fadenleiters (50) einen kegelstumpfförmigen glatten Abschnitt (502), vorzugsweise mit konvexer Erzeugender, gegen den die konvergierenden Fasern (F) gleiten, und einen glatten zylindrischen Abschnitt (503) umfaßt, der den kegelstumpfförmigen Abschnitt gemäß der Vorbeilaufrichtung (VD) des stabförmigen Körpers (1) verlängert und deutlich mit der Peripherie (14) des stabförmigen Körpers fluchtet.

4. Vorrichtung nach einem beliebigen der Ansprüche 1 bis 3, dadurch **gekennzeichnet,** daß das Drehelement (51) eine Spiralverzahnung (511) aufweist, die in die Nuten (13) des stabförmigen Körpers (1) eindringt, um die umgelegten Fasern (F) zu den Böden (15) der Nuten (13) hin zu schieben, und die Mittel zum Schieben (51, 52) außerdem Mittel (52) umfassen, um das Drehelement (51) abhängig von der scheinbaren Drehgeschwindigkeit der Nuten (13) des stabförmigen Körpers (1) in Rotation mitzunehmen.

5. Vorrichtung nach Anspruch 4, dadurch **gekennzeichnet,** daß das Drehelement eine Schnecke (51) oder ein Zahnrad ist, das eine Drehachse (510) senkrecht oder parallel zum stabförmigen Körper (1) aufweist.

6. Vorrichtung nach Anspruch 5, dadurch **gekennzeichnet,** daß die Mittel zum Schieben (51, 52) zwei Drehelemente (51) umfassen, deren Drehachsen (510) symmetrisch in bezug auf den stabförmigen Körper (1) angeordnet sind.

7. Vorrichtung nach Anspruch 4, dadurch **gekennzeichnet,** daß das Drehelement ein Spindelelement ist, das eine zum stabförmigen Körper (1) koaxiale Bohrung aufweist und mit Zähnen versehen ist, die jeweils in die Nuten (13) des stabförmigen Körpers (1) eindringen.

8. Vorrichtung nach einem beliebigen der Ansprüche 4 bis 7, dadurch **gekennzeichnet,** daß die Mittel zum Mitnehmen in Rotation (52) mechanisch mit den Trägermitteln (4) gekoppelt sind.
